# EUROPEAN PATENT APPLICATION

(11) **EP 2 840 538 A1**
(43) Date of publication of application: **25.02.2015**
(21) Application number: 13181422.0
(22) Date of filing: 22.08.2013
(51) Int. Cl.: G06Q 10/10

(54) **A method for processing a set of questions**

(71) Applicant: Careers International, 1050 Bruxelles (BE)
(72) Inventor: Wajskop, Stéphane, 1050 BRUXELLES (BE)
(74) Representative: Quintelier, Claude

(57) **Abstract**

A method for processing a set of questions generated during an on-line question-answer session, wherein the questions generated by a participant and their answers generated by a speaker are stored in a database under control of a steering server, wherein upon starting the session a time clock is started and a question number counter is initialised, and wherein each time, when one of the questions is answered the current question number is fetched by a web server and attributed to the asked question and the time indicated by the time clock at the moment the question is answered is fetched by said web server, said current question number and said indicated time being associated by said web server to form a question stamp which is allocated to the current question and answer, said question stamp being stored in said database, said question counter being thereafter incremented.

## Description

The present invention relates to a method for processing a set of questions generated during an on-line question-answer live session, wherein the questions generated by a participant and answers to these questions and generated by a speaker are stored in a database under control of a steering server.

Such a method is known and for example applied in a question-answer session running over the Internet. The participant has logged in on a website on which the speaker is also logged in. By means of a webcam the questions and the answers are recorded for storage into a database. In such a manner the question-answer session cannot only run live, but also be archived for a later use.

A drawback of the known method is that the storage of the questions and the answers is cumbersome as a live stream is recorded and stored. This signifies that for retrieving a particular question and answer from the stored one a time consuming operation is required causing a too long waiting time for the participant.

It is an object of the present invention to provide a method where storing and retrieving of questions and answers is realised in a less time consuming manner.

For this purpose a method according to the present invention is **characterised in that** at a start of the session a time clock is started and a question counter provided for attributing question numbers is initialised, and wherein each time when one of the questions is answered by the speaker the current question number, indicated by the question counter is fetched by a web server and attributed to the asked question and the time indicated by the time clock at the moment the question is answered is fetched by said web server, said actual question number and said indicated time being associated by said web server to form a question stamp which is allocated to the current question and the answer thereon, said question stamp being stored in said database, said question counter being thereafter incremented. In such a way each question and answer are uniquely identified by the question stamp. As moreover this operation is realised by using the web server, which is different from the steering server, the attribution of the question stamp is not interfering with the storage of the question and answer as such as the latter is performed by the steering server. As the question stamp is allocated to the current question and answer and stored as a combination in the database, retrieving the question and answer at a later stage will be easy and quick by using the question stamp for addressing the selected question.

A first preferred embodiment of a method according to the invention is **characterised in that** each question asked by the participant is sent under control of the steering server to a moderator who upon receipt of the question approves or rejects the question and forwards the approved questions to the speaker, said rejected questions being stored in the database. The presence of a moderator enables to filter the question and avoid that unrelated or inappropriate questions are addressed to the speaker. However by storing the rejected questions, the latter are not lost for ever.

A second preferred embodiment of a method according to the invention is **characterised in that** the moderator has a direct access to the steering server independent of the access of the participant. In such a manner the moderator can intervene at any time in the processing performed by the steering server.

The invention will now be described in more details with references to the annexed drawings illustrating a preferred embodiment of the device and the method according to the invention. In the drawings :
figure 1 shows an overall view illustrating the device and the method according to the present invention;
figure 2 shows how the participant is logged in into and operates within the system;
figure 3 shows how the speaker is logged in into and operates within the system;
figure 4 shows how the moderator is logged in into and operates within the system;
figure 5 respectively 6, illustrate how the steering server and the web-server cooperate; and
figure 7 shows the workflow applied within the method of the present invention.

In the drawings a same reference sign has been allocated to a same or a similar element.

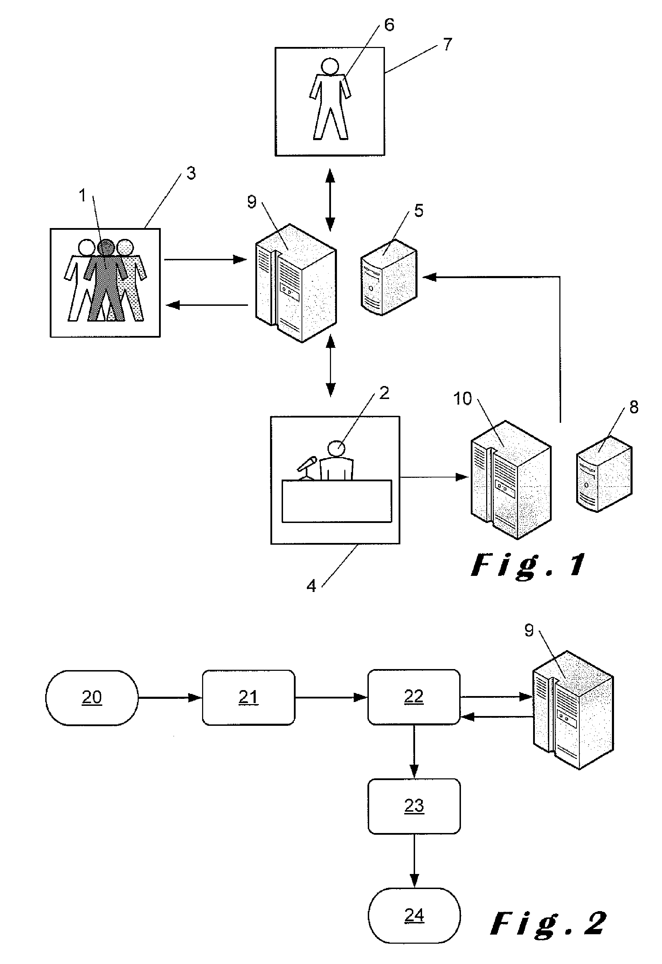

In an on-line question-answer live session there is always, as illustrated in figure 1, at least one participant 1 and a speaker 2 communicating with each other. Both the participant and the speaker generally use a computer 3, 4 provided with a web-cam, which computers communicate with a communication network, like for example the Internet, with a steering server 5 connected to a database 9. In order to manage the session there is preferably a moderator 6 communicating via his or her computer 7 with the steering server 5.

The participant is preferably only entitled to send questions to the steering server 5 and to receive answers and an overview of the pending questions from the steering server 5. In such a manner it is avoided that a user could manipulate the operation of the steering server or get access to the database 9. On the other hand the speaker 2 and the moderator 6 have access to the server in order to control the operation thereof.

The computer 4 of the speaker 2 is further connected to a web server 8 provided with a further database 10, which web server is also connected to the steering server 5. The latter connection can be a wired or a wireless connection.

Figure 2 illustrates how the participant communicates with the steering server 5. When the participant wants to participate to the on-line question-answer live session, he or she will, after having started 20 his or her computer login 21 to the site of the session. Once the login is realised the participant will select 22 a session of the one available. Once the session has been selected, the steering server will address the selected session in the database and enable the participant to view 23 the session. Once the session finished or if the participant wants to leave the session, the connection between the participant and the steering server will be interrupted (24).

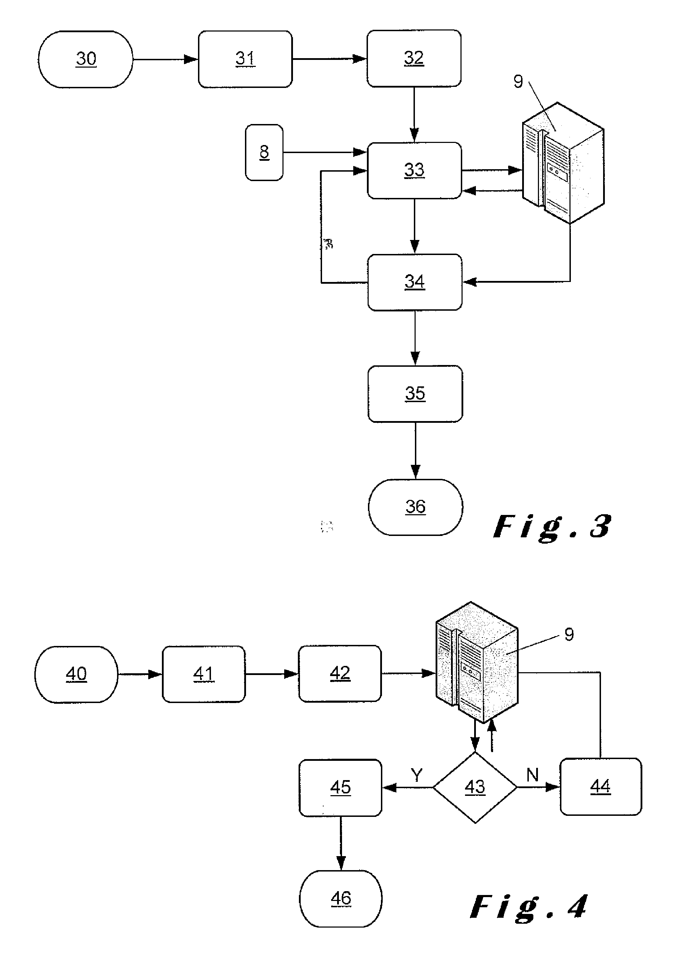

Figure 3 illustrates how during a live session the speaker communicates with the steering server and the web server. When the speaker starts up 30 his session he or she will login 31 to both the steering and the web server for starting 32 the session in which the speaker acts. Once the session is started 33, the communication between the database 9 and the web server is established and the speaker will start answering the question currently on file in the session.

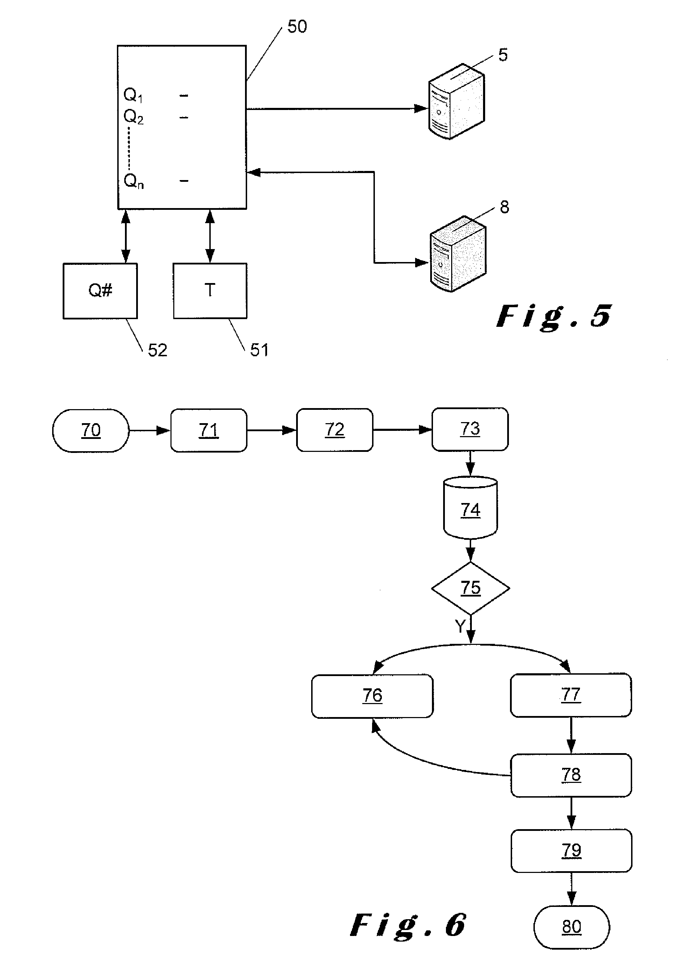

When the speaker starts the session, a time clock 1, as illustrated in figure 5, is started and a question counter 5 is initialised. The question counter is provided for attributing question numbers (Qi; 50) to each asked and answered question. When the speaker starts answering the first question Q1 the web server fetches the current time Ta1 indicated by the clock and also the current number (Q1) indicated by the question counter 52. This current time and the current question number are associated by the web server to form a question stamp. The question stamp is allocated to the current question and to the answer given to this question by the speaker. The question stamp is then stored in the database under control of the steering server 5. After having fetched the current question number of the question counter the latter is incremented in order to allocate a subsequent question number to a subsequent answered question.

The questions are successively answered 34 by the speakers and the process of generating a question stamp and allocating it to the question answered is repeated for each answered question. When all the questions of the set to be dealt with in the session are answered the session is closed 35 by the speaker and stopped 36.

Preferably use is made of a moderator who moderates the session. This invention of the moderator enables to manage the session and have the speaker concentrated on answering the questions. As illustrated in figure 4 the moderator will start 40 by logging in 41 into the session. Thereafter the moderator will select 42, his or her session to moderate, which will trigger a request to the database 9. Each question asked by the participant is then sent under control of the steering server to the moderator. The moderator has then to approve or reject 43 the received question. So, for example the moderator can reject a question because it is not appropriate for the pending session or not related to the topic of the session. If necessary the moderator can temporarily hold up a question.

When the moderator approves the question (43; Y) the question is sent 45 to the speaker for being answered. When the question is rejected (43; N) the question is transferred 44 to the database where it is stored for archiving purpose. If all questions have been answered the intervention of the moderator is finished 48.

Figure 7 illustrates the whole workflow. Once the session is started 70 and all the participants, the speaker and if present the moderator are logged in 71, one of the participants will submit 72 a question. This will trigger that a request is sent 73 to the steering server and the questions being temporarily stored 74 in the database. The moderator has then to approve or reject 75 the question. If the question is approved it will pop-up 76 at the side of the participant and the steering server will send 77 the question to the speaker. The latter will answer 78 and thereby causing that the answer is sent to the participant. The answer and question stamp are then generated. If all questions have been answered the session is closed 79 and stopped 80.

As all the questions and the answers are stored in the database they can be retrieved by a participant even after the live session is finished. Upon retrieving a question stored in the database the question to be retrieved is selected by a participant. As each question and its answer have a question stamp, the question stamp of the selected question is retrieved from the database and sent to the web server. The latter that subsequently addresses on the basis of the question stamp the database and so the question and the answer are retrieved from the database under control of the steering server.

## Claims

1. A method for processing a set of questions generated during an on-line question-answer live session, wherein the questions generated by a participant and answers to these questions and generated by a speaker are stored in a database under control of a steering server, **characterised in that** at a start of the session a time clock is started and a question counter provided for attributing questions numbers is initialised, and wherein each time, when one of the questions is answered by the speaker the current question number indicated by the question counter is fetched by a web server and attributed to the asked question and the time indicated by the time clock at the moment the question is answered is fetched by said web server, said current question number and said indicated time being associated by said web server to form a question stamp which is allocated to the current question and the answer thereon, said question stamp being stored in said database, said question counter being thereafter incremented.

2. The method according to claim 1, **characterised in that** upon retrieving a question stored in said database the question to be retrieved is selected and the question stamp of the selected question is thereafter retrieved from said database and send to said web server, said web server subsequently addresses on the basis of said question stamp the database in order to retrieve the selected question which is then retrieved by said steering server.

3. The method according to claim 1 or 2, **characterised in that** each question asked by the participant is sent under control of the steering server to a moderator who upon receipt of the question approves or rejects the question and forwards the approved questions to the speaker, said rejected questions being stored in the database.

4. The method as claimed in claim 3, **characterised in that** the moderator has a direct access to the steering server independent of the access of the participant.

5. The method according to claim 3 or 4, **characterised in that** the moderator can temporarily uphold the question before approving it.

6. The method according to any one of the claims 1 to 5, **characterised in that** the questions to be answered by the speaker are displayed for the speaker and the participant.
